# EUROPÄISCHE PATENTSCHRIFT

(11) **EP 4 176 178 B1**
(45) Veröffentlichungstag und Bekanntmachung des Hinweises auf die Patenterteilung: **09.04.2025**
(21) Anmeldenummer: 21735863.9
(22) Anmeldetag: 15.06.2021
(51) Int. Cl.: F16B 37/08

(54) **VORRICHTUNG ZUR HERSTELLUNG VON STECKVERBINDUNGEN, VERFAHREN ZUR HERSTELLUNG DER STECKVERBINDUNGEN UND VERWENDUNG DER VORRICHTUNG**
DEVICE FOR PRODUCING PLUG JOINTS, METHOD FOR PRODUCING THE PLUG JOINTS AND USE OF THE DEVICE
DISPOSITIF DE PRODUCTION DE JOINTS OBTURATEURS, PROCÉDÉ DE PRODUCTION DES JOINTS OBTURATEURS ET UTILISATION DU DISPOSITIF

(30) Priorität: 03.07.2020 DE 102020117633
(43) Veröffentlichungstag der Anmeldung: 10.05.2023
(73) Patentinhaber: Karlsruher Institut für Technologie, 76131 Karlsruhe (DE); HMB GmbH, 76135 Karlsruhe (DE)
(72) Erfinder: UMMENHOFER, Thomas, 76229 Karlsruhe (DE); DONCA, Ioan, Luchian, 76131 Karlsruhe (DE); MÜLLER, Alfred, 75210 Keltern (DE); HAFNER, Markus, 76307 Langensteinbach (DE)
(74) Vertreter: Meissner Bolte Düsseldorf Patentanwälte Rechtsanwälte Partnerschaft mbB
(86) Internationale Anmeldenummer: PCT/EP2021/066100
(87) Internationale Veröffentlichungsnummer: WO 2022/002580

(56) Entgegenhaltungen:
- GB-A- 1 300 856
- US-A- 1 879 421
- US-A- 2 209 495
- US-A- 4 819 983
- US-B2- 7 207 762
- US-B2- 9 353 779

## Beschreibung

Die vorliegende Erfindung betrifft eine Vorrichtung zur Herstellung von Steckverbindungen zwischen mindestens zwei Bauteilen sowie ein Verfahren zur Herstellung dieser Steckverbindungen und eine Verwendung der Vorrichtung.

Im Bauwesen werden bei der Fertigbauweise die einzelnen Bauteile im Herstellwerk vorgefertigt, an die Baustelle geliefert und dort endmontiert. Diese Bauweise bringt einige Vorteile mit sich, wie beispielsweise die kurze Bauzeit, Kostensicherheit und fixe Fertigstellungstermine. In Deutschland werden derzeit ca. 15,6 % der neu gebauten Wohnhäuser in Fertigbauweise errichtet, wobei die Tendenz steigend ist.

Am Markt existieren einige Verbindungssysteme. Hierzu gibt es eine Reihe von Veröffentlichungen. Beispiele sind die DE 10 341 350 A1, WO 01/85043, GB 1 300 856 A und WO 2013/104533.

Ebenso sind zahlreiche Veröffentlichungen und Produktinformationen bekannt. Beispielsweise sei auf Folgendes hingewiesen:
**H-Bau Technik GmbH:** Powercon - Lastverbinder für Fertigteile, Produktbroschüre 04/2017: Offenbart wird ein universelles Schnellverbinder-System für das Bauen mit Fertigteilen für die Betonfertigteile und Holzfertigbau, DIBt-Zulassung Z-14,4-70.
**PEIKKO Deutschland GmbH:** PVL Verbindungsschlaufe, Produktbroschüre 04/2010: Die Anwendung begrenzt sich auf Normalbeton und Vergussmörtel mit einer Mindestgute von C25/30.
**BT-Innovation GmbH:** Technisches Datenblatt - BT-Spannschloss^{®} M12/M16/M20; Mai 2019: Offenbart werden Bemessungswerte für die Zugtragfähigkeit (Grenzzugkraft) und für die Querkraftfähigkeit (Grenzquerkraft) gemäß DIBt Zulassung Z-14.4-599 DIBt-Zulassung Z-14.4-599.
**MHM** - **Massiv-Holz-Mauer Entwicklungs GmbH:** Detail und Planung, Kapitel 15: Konstruktionsbeispiele S.97-125: Planungshandbuch 2012: Hierin werden Klassische Anschlüsse durch Schrauben oder Vernagelung bei Massivholzmauerwerk offenbart.
**Knapp GmbH:** Produktborschüre Verbindungssysteme für den modernen Holzbau 01/2020: Offenbart werden Holzverbinder zur Verbindung von Haupt- und Nebenträger, welche auch zur seitlichen Verbindung von Elementwänden eingesetzt werden können.
**Simpson Strong-Tie GmbH:** Balkenschuhe GLE/GLI, Produktinformation 2020: Beschrieben werden sog. Balkenschuhe, d.h. Aufnahmen für Holzbalken für die Anbindung an Beton, Stahl oder andere Massivbauteile.
**Hub, Alexander, Universität Stuttgart:** Integriertes Konzept zur nachhaltigen Errichtung von Gebäuden in massiver Elementbauweise, Kapitel 8: Verbindungselemente für trocken gefügte Betonbauteile, S.105-112; Forschungsberichte itke 33, 2012, Hg. Professor Dr.-Ing. Jan Knippers, Institut für Tragkonstruktionen und Konstruktives Entwerfen, Universität Stuttgart.

Alle am Markt erhältlichen Systeme weisen Nachteile auf. Im Speziellen ist ein Toleranzausgleich nicht möglich oder nur sehr beschränkt. Bei einigen Verbindungstechniken von Betonfertigteilen müssen die Stoßfugen aufwändig mit Mörtel vergossen werden, was eine Wiederlösbarkeit erschwert oder unmöglich macht und auch einen Mehraufwand beim Einbau darstellt. Damit ist auch die Wiederverwendbarkeit der Systeme oft gar nicht oder nur sehr eingeschränkt möglich.

Aufgabe der Erfindung ist es, die genannten Nachteile des Standes der Technik zu beseitigen und insbesondere eine Wiederverwendbarkeit der Systemkomponenten und der Bauteile zu ermöglichen. Weitere Aufgaben ergeben sich für den Fachmann aus der nachfolgenden Beschreibung.

Gelöst wird die Aufgabe durch die in den Ansprüchen dargestellten Gegenstände, wobei die abhängigen Ansprüche bevorzugte Ausführungsformen darstellen.

Weiterhin gelöst wird die Aufgabe durch eine Vorrichtung nach Anspruch 1.

Die Grundidee der Erfindung besteht darin, den Zapfen der zweiten Verbindungskomponente durch eine Öffnung in die erste Verbindungskomponente einschiebbar und dort durch den Greifmechanismus fixierbar zu gestalten, wobei der Greifmechanismus aus dem Hohlraum der ersten Verbindungskomponente lösbar und mit dem Zapfen aus diesem entnehmbar gestaltet ist. Hierzu ist der zur ersten Verbindungskomponente gehörenden Hohlraum zur zweiten Verbindungskomponente hin durch eine Sperrplatte abgedeckt, die den Greifmechanismus im Hohlraum hält und vorzugsweise auch fixiert. Der Greifmechanismus ist durch die Sperrplatte gegen eine Entnahme aus dem Hohlraum gesichert.

Das zweite Bauteil ist vorzugsweise unterhalb des ersten Bauteils angeordnet. Es wird beispielswiese durch eine horizontale Bodenplatte wie z.B. eine Geschossbodenplatte in einem Gebäude gebildet, bei dem die Zapfen vorzugsweise vertikal nach oben hinausragen. Das erste Bauteil wird beispielsweise durch eine flexibel montier- und demontierbare Zwischenwand gebildet, wobei der Hohlraum nach unten gerichtet und durch die Sperrplatte nach unten hin abdeckbar ist, wodurch in vorteilhafter Weise ein Ansammeln von Verunreinigungen im Hohlraum und damit am Greifmechanismus in vorteilhafter Weise entgegengewirkt wird.

Eine bevorzugte Ausgestaltung der Sperrplatte weist folglich einen Durchbruch oder Öffnung unter dem Hohlraum vor, durch den der oder die Zapfen der zweiten Verbindungskomponente in den Hohlraum und dort in den Greifmechanismus einschiebbar ist. Aus dem Hohlraum lösbar wird der Greifmechanismus durch eine Entfernung oder vorzugsweise Verschiebung der Sperrplatte, wobei diese eine zur zweiten Verbindungskomponente weisende Öffnung unter dem Hohlraum freigibt oder den den Hohlraum überspannenden Anteil des Durchbruchs oder der Öffnung so weit erweitert, dass durch diese der Greifmechanismus aus dem Hohlraum entnehmbar ist.

In der vorgenannten bevorzugten Ausgestaltung ist eine Sperrplatte unter dem Aufnahmeteil angeordnet und zwischen zumindest zwei Positionen lateral verschiebbar. Der Aufnahmeteil weist vorzugsweise zwei Nuten auf, in denen die Sperrplatte schiebebeweglich angeordnet ist. Die Sperrplatte weist ihrerseits eine Öffnung auf, die bei entsperrter Position die Befreiung des Greifmechanismus aus dem Hohlraum ermöglicht. In einer ersten der zwei Positionen ist der Bereich der Öffnung über dem Greifmechanismus in seiner lateralen Ausdehnung kleiner als der Greifmechanismus, sodass jener nicht durch die Öffnung aus dem Hohlraum entnehmbar ist und vorzugsweise durch die Sperrplatte in der Öffnung eingespannt ist. In einer zweiten der zwei Positionen ist der Bereich der Öffnung über dem Greifmechanismus in seiner lateralen Ausdehnung größer als die laterale Ausdehnung des Greifmechanismus, sodass jener durch die Öffnung aus dem Hohlraum entnehmbar ist.

In einer weiteren optionalen zusätzlichen dritten Position der Sperrplatte unter dem Aufnahmeteil ist der Bereich der Öffnung über dem Greifmechanismus in seiner lateralen Ausdehnung kleiner als der Greifmechanismus, sodass jener nicht durch die Öffnung aus dem Hohlraum entnehmbar ist. Anders als in der vorgenannten ersten Position ist der Greifmechanismus hier durch die Sperrplatte in der Öffnung nicht eingespannt. Realisierbar ist dies vorzugsweise dadurch, dass die Sperrplatte in der in dieser dritten Position den Hohlraum überdeckenden Bereich um die Öffnung zum Hohlraum hin eine Vertiefung aufweist, die Einspannung des Greifmechanismus im Hohlraum verhindert und eine laterale Beweglichkeit zulässt.

Eine erste bevorzugte Ausführungsform der zweiten Verbindungskomponente umfasst einen Zapfen mit einem axial zum Zapfen orientierten Zahnprofil, das geeignet ist, mit dem Greifmechanismus der ersten Verbindungskomponente in mechanischer Wechselwirkung zu stehen und dabei gegeneinander fixiert zu werden, vorzugsweise formschlüssig. Vorzugsweise ist das Zahnprofil umlaufend auf dem Zapfen mit einem bevorzugt runden Querschnitt angeordnet und bildet die umlaufende Mantelfläche des Zapfens zumindest teilweise aus.

Das Zahnprofil ist vorzugsweise als Sägezahnprofil ausgestaltet, d.h. einem Profil, bei dem die Zahnflanken in eine Richtung flacher, d.h. mit einem geringeren Anstellwinkel als in die andere Richtung ausgestaltet sind. Dies hat zum Vorteil, dass einerseits die flacheren Zahnflanken ein Einschieben des Zahnprofils in den Greifmechanismus begünstigen, andererseits die steileren Zahnflanken in Gegenrichtung eine formschlüssige Verankerung im Greifmechanismus verstärken. Eine Ausgestaltung sieht vor, die steileren Zahnflanken als Hinterschnitte (Anstellwinkel >90°) auszugestalten, womit die Verankerung in vorteilhafter Weise zusätzlich eine Verhakung der Zahnflanken mit den Gegenflächen des Greifmechanismus ermöglichen und so weiter stabilisieren.

Im Rahmen einer ersten bevorzugten Ausgestaltung des Zapfens weist das umlaufende Zahnprofil keine Steigung auf, wobei der Zapfen weiter bevorzugt und für eine Herstellung vorteilhaft zumindest im Erstreckungsbereich des Zahnprofils rotationssymmetrisch gestaltet ist.

Im Rahmen einer zweiten bevorzugten Ausgestaltung des Zapfens weist das umlaufende Zahnprofil eine Steigung auf, d.h. es wird vorzugsweise zumindest abschnittsweise als ein oder mehrgängiges Gewinde ausgestaltet. Weiter bevorzugt wird der Zapfen durch kostengünstige Normteile wie z.B. eine Gewindestange oder eine Gewindespindel gebildet.

Weiter bevorzugt lässt sich das Gewinde damit nicht nur als Gegenpart für den in das Gewinde eingreifende Greifmechanismus, sondern auch als Befestigung des Zapfens im zweiten Bauteil oder einer anderen Komponente nutzen, wobei der Zapfen in diesem Fall bevorzugt in besonders kostengünstiger Weise und mit einer in seiner vollen Länge durch eine durchgängige Gewindestange bevorzugt gebildet wird.

Ein geradzahlgängiges Gewinde weist den Vorteil auf, dass jeweils auf dem Zapfen gegenüberliegende Gewindeflanken sich stets axial auf gleicher Höhe gegenüberstehen und so von dem Greifmechanismus mit gegenüberliegenden gleich gestalteten Greifbackenelementen in vorteilhafter Weise symmetrisch fixierbar sind.

Ein ungeradzahlgängiges Gewinde weist den vorgenannten Vorteil nicht auf. Hier stehen sich keine zwei axial auf gleicher Höhe positionierte Gewindeflanken gegenüber, und es bedarf entweder eines Höhenausgleichs von gleich gestalteten Greifbackenelementen oder eine entsprechende Berücksichtigung der in die Gewindeflanken eingreifenden Greifbackenelemente.

Vorzugsweise ist vorgenannte Ausführungsform mit einem Greifmechanismus gemäß einer ersten bevorzugten Ausführungsform kombinierbar. Diese Ausführungsform umfasst mindestens ein Greifbackenelement mit einem auf dieses in Richtung des Zahnprofils wirkendes Federelement, womit das Greifbackenelement formschlüssig zwischen mindestens zwei Zähne des Zahnprofils einschiebbar ist. Wird das Zahnprofil des Zapfens in den Hohlraum der ersten Verbindungskomponente in den Greifmechanismus eingeschoben, so erfolgt ein elastisches Einrasten des mindestens einen Greifbackenelements zwischen den Zähnen des Zahnprofils.

Eine Ausgestaltung sieht ein Greifbackenelement mit einem Greifbackenzahnprofil mit mindestens zwei Zähnen vor, wobei das Zahnmodul von Zahnprofil und Greifbackenzahnprofil gleich ist und jenes so in das Zahnprofil über die gesamte Profillänge formschlüssig einschieb- und einrastbar ist.

Im Falle einer umlaufenden Zahnprofils der vorgenannten Art umfasst der Greifmechanismus gemäß vorgenannter Ausführungsform aus mindestens zwei, vorzugswiese drei oder vier um den Zapfen angeordnete Greifbackenelemente, die bevorzugt durch eine Ringfeder umschlossen sind und radial von allen Seiten in das umlaufende Zahnprofil eingreifen.

Im Falle eines Gewindes auf dem Zapfen lassen sich optional die in das Gewinde eingreifende Greifbackenelemente ebenfalls aus Normteilen (z.B. Schraubenmutter) herstellen, beispielsweise durch eine radiale Aufteilung einer Schraubenmutter in mehrere Schraubenmuttersegmente vorzugsweise mit gleicher Winkelüberspannung, vorzugsweise in drei oder vier Segmente mit jeweils 120° bzw. 90° Winkelüberspannung. Die Schraubenmuttersegmente werden dann um das Gewinde wie eine Schraubenmutter zusammengesetzt und dabei federnd radial an das Gewinde gedrückt (z.B. durch eine um die Schraubenmuttersegmente umschließende Ringfeder).

Erfindungsgemäß ist in dem Hohlraum ein aus abwechselnd positionierten Greifbackenelementen und Gleitscheiber zusammengestellter Greifmechanismus angeordnet, d.h. die Greifbacken sind entlang der axialen Ausrichtung des Zahnprofils in mehreren Ebenen übereinander angeordnet, wobei zumindest zwischen zwei der übereinander angeordneten Greifbacken eine Gleitscheibe angeordnet ist.

Eine weitere Ausgestaltung des Greifmechanismus umfasst eine Anordnung von mindestens zwei aufeinander gestapelten Einzelplatinen (Bleche), die zusammengesetzt einen Greifplatinenmechanismus der vorgenannten Art bildet. Vorzugsweise bilden 1 bis 10 aufeinander gestapelte Platinen ein Greifplatinenmechanismus. Diese Ausgestaltung ermöglicht in vorteilhafter Weise einen Ausgleich nicht nur von Fertigungsungenauigkeiten im Zahnprofil und Greifmechanismus zueinander, sondern erleichtern als Blechpaket auch Biegebewegungen, was wiederum der Steckverbindung eine erhöhte Elastizität gibt. Gerade letzteres ermöglicht insbesondere bei zusammengefügten Bauteilen aus sog. arbeitenden Materialien wie z.B. Holz eine erforderliche Nachgiebigkeit in vorteilhafter Weise.

Jede Platine weist eine optional innerliegende Aussparung mit bevorzugt radial von dieser ausgehenden Schlitzen auf, die eine federnde Biegung der Platine in Aussparungsbereich ermöglichen. Die Innenkanten der aufeinander positionierten Platinenaussparungen bilden eine Greifleibung. Die Innenkanten der Platinen sind in im Bereich der Aussparung zum Einführen des Zapfens optional beidseitig gefräst. Das Innerkantenprofil der Platinenaussparung kann alle Formen aufweisen um den Griff mit dem einzurastenden Zapfen zu sichern. Die Platinen werden vorzugsweise aus einem elastischen Metall, weiter bevorzugt Stahl oder Federstahl gefertigt sein. Optional sind weitere Werkstoffe einsetzbar.

Im zweiten Bauteil ist in einer bevorzugten Ausführungsform der Erfindung der Zapfen über ein metrisches Gewinde befestigt. Wenn seiner Bauart es ermöglicht, kann das zweite Bauteil eine Muffe zur Befestigung des Zapfens aufweisen. Hierbei ist als Variante vorgesehen, dass der greifbare Bereich des Zapfens derart ausgestaltet wird, dass er gegen Zugbespannung gesichert einrastbar ist. Dabei kann die Erfindung so variiert sein, dass der sperrbare Bereich des Zapfens in Form von zahnartigen Elementen ausgestaltet ist. Bevorzugt ist hierbei, dass die Neigung der zahnartigen Gestaltungen in Einschubrichtung ausgestaltet ist. Beim Einsatz einer Ausführung mit aus Platinen zusammengestelltem Greifmechanismus sind auch jede Art von Schrauben, oder parallel Nutbolzen verwendbar. Das Einschnappen im Greifmechanismus erfolgt über die eigene Geometrie/Gewinde der Schraube/Nutbolzen.

Durch das erfindungsgemäße Stecksystem können mithin zwei Bauteile über ihre Kontaktflächen formschlüssig verbunden werden, wobei sich auf der einen Kontaktfläche einen Aufnahmeteil mit einem Hohlraum und Greifmechanismus ("Mutterteil"), und auf der anderen Kontaktfläche ein Zapfen ("Vaterteil") befindet. Die Verbindung bildet sich mit einem einfachen Einklicken oder Einrasten des Zapfens in den Greifmechanismus aus. Im Detail kann das "Mutterteil" mithin aus einem Aufnahmeteil optional mit dosenförmigem Raum bestehen, welches im ersten Bauteil (z.B. mittels Schrauben bei Holzbauteilen) befestigt ist. Eine optionale Sperrplatte dient dem Abschluss des Hohlraums zum zweiten Bauteil hin, ist vorzugsweise verschiebbar (z.B. über Nuten mit Hinterschnitt in Längsrichtung) am Aufnahmeteil angebracht und ist weiter bevorzugt mittels einer Arretierungsschraube fixierbar. In dem Hohlraum ist der Greifmechanismus eingesetzt. In einer mit Greifbacken-Greifmechanismus vorgesehenen Ausführungsform können die einzelnen GreifbackenGruppen und Gleitscheiben abwechselnd eingebaut werden, wobei die GreifbackenGruppen durch Ringfedern ihre Schließwirkung erhalten können. In der mit Greifplatinenmechanismus vorgesehenen Ausführungsform ist das als Anordnung von aufeinander gestapelten Platinen gebildeten Greifmechanismus in dem Hohlraum einzusetzen.

Der Greifmechanismus ist in einer möglichen weiteren Ausführungsform mit Spiel im Hohlraum eingesetzt und ist weiter bevorzugt in diesem lateral verschiebbar angeordnet. Eine laterale Verschiebbarkeit des Greifmechanismus im Hohlraum kann nach beiden Seiten (zweidimensional) oder nur einseitig (eindimensional) ausgelegt sein. Eine optionale Ausgestaltung sieht vor, den Toleranzausgleich nach einer Ausrichtung mit einem Füllmaterial wie z.B. Mörtel zu verfüllen. Dadurch wird eine zusätzliche Fixierung erreicht bzw. eine Aufhebung der Verschiebbarkeit erreicht.

Das "Vaterteil" besteht vorzugsweise aus einem runden Zapfen oder Schraube/ Nut Bolzen und ist im zweiten Bauteil befestigt. Die Befestigung des Zapfens an dem zweiten Bauteil erfolgt vorzugsweise über ein metrisches Außengewinde am Zapfen und eine Verbundmuffe, die ein entsprechendes Innengewinde aufweist, welche im zweiten Bauteil eingeschraubt ist. Das andere Ende des Zapfens, welches eine Zahnung besitzt, kann zur Herstellung der Verbindung in den Greifmechanismus des "Mutterteils" eingeschoben werden. Bei der Ausführungsform mit einem vorgenannten Greifplatinenmechanismus als Mutterteil kann auch jeder Art von Schraube/Nutbolzen eingesetzt werden.

Das Steckverbindungssystem gemäß der Verbindung besitzt nachfolgend aufgeführte Eigenschaften und Funktionen:
- Es ist ein Selbstverriegelungsmechanismus vorhanden. Beim Einschieben des Zapfens in den Hohlraum mit Greifmechanismus erfolgt die Herstellung der Verbindung durch selbsttätiges Einrasten der Greifbackenelemente oder Greifleibung in die Zähne oder Gewinde des Zapfens. Optional ist die Verzahnung des Zapfens über eine besondere Geometrie zu besetzen: die nach innen liegende Neigung der Flansche der Zähne des Zapfens gewährleistet bei Zugkraftbeanspruchung ein Ineinandergreifen der Verzahnung und der Greifbackenelemente. Die Schließkraft der Greifbackenelemente kann durch Ringfedern/Seitfedern erzeugt werden. Das Besondere dabei ist, dass durch eine Anordnung mehrerer Greifbackengruppen mit Höhenversatz ein alternierendes Greifbacken-Zapfen-Einrasten zur Sicherstellung der Verbindung mit hoher Prozesssicherheit ermöglicht wird. Der Einbau von "Mutterteil" und "Vaterteil" des Steckverbindungssystems ist so konzipiert, dass nach dem Zusammenbau der beiden Bauteile eine nahezu vollständig verdeckte Befestigung entsteht, die wenigen noch sichtbaren Bestandteile, d.h. das. Aufnahmeteil mit Sperrplatte und Arretierungsschraube, können z.B. durch eine Fußbodenleiste verdeckt werden.

Erfindungsgemäß kann eine zerstörungsfreie Lösbarkeit und Wiederverwendbarkeit der Abbauteile gewährleistet werden. Durch Lösen der optionalen Arretierungsschraube und Verschieben oder Entfernen der Sperrplatte lässt sich die durch das vorgenannte Steckverbindungssystem hergestellte Verbindung zerstörungsfrei lösen. Durch das Verschieben der Sperrplatte am "Mutterteil" wird diese und eine vorhandene, bevorzugt Schlüsselloch-ähnliche, Öffnung so positioniert, dass durch diese Öffnung der Greifmechanismus, welche noch den Zapfen umschließt, hindurchgeführt werden kann, so dass die Verbindung gelöst ist. Die beiden Bauteile (z.B. Elementwände) können in Normalrichtung zur Verbindungsfläche auseinander bewegt werden. Der Zapfen mit umschließendem Greifmechanismus kann anschließend aus der Verbundmuffe ausgeschraubt oder entfernt werden. Der Greifmechanismus kann sodann durch Aufweitung der Ringfedern vom Zapfen vollständig gelöst werden. Der Greifmechanismus kann nun wieder in ein "Mutterteil" eingebaut werden und durch Rückschieben der Sperrplatte sowie Fertigstellen der Arretierungsschraube erneut verwendet werden.

Beim alternativen Einsatz eines Greifplatinenmechanismus ist eine Ausführung ohne Sperrplatte möglich und kann in dieser Ausführungsform zum Zweck der Auslösung das Vaterteil geschnitten werden. Beim Einsatz eines Greifplatinenmechanismus ist im dargestellten Ausführungsbeispiel keine (dem Zapfen zerstörungsfrei) Befreiung des innerhalb des Hohlraumes befindenden Greifplatinenmechanismus vorgesehen.
- Es ist auch die statische Tragbarkeit gewährleistet. Die durch das Steckverbindungssystem hergestellte Bauteilverbindung besitzt eine hohe Zugkrafttragfähigkeit, deren Tragwiderstand durch duktiles, d.h. gutartiges Versagen des Zapfens eintritt und somit rechnerisch über dessen Querschnitt nachweisbar ist. Druckkräfte werden über die Kontaktfläche der beiden durch das Steckverbindungssystem gefügten Bauteile übertragen. Die Übertragung von Querkräften kann nach lateraler Positionierung des Greifmechanismus im Hohlraum problemlos über eine Fixierung dessen oder ein nachträgliches Ausfüllen des Hohlraums mit einem druckfesten Medium (z.B. Mörtel oder Klebstoff) erfolgen
- Ebenso kann eine Selbstabdichtung erzielt werden. Die Abdichtung der Fügeteile zwischen den beiden Bauteilen, welche durch die Steckverbindung verbunden werden, erfolgt dann beispielsweise über Kompressionsdichtungen an den Kontaktflächen der Bauteile, vorzugsweise zwischen Sperrplatte und zweitem Bauteil.
- Erfindungsgemäß ist auch ein dreidimensionaler Toleranzausgleich möglich. Es kann ein zweidimensionaler Toleranzausgleich, vorzugsweise durch die vorgenannte laterale Positionierung und Fixierung des Greifmechanismus im Hohlraum in der Kontaktebene erreicht werden. Zusätzlich kann ein Toleranzausgleich orthogonal zur Positionierungsebene durch das schrittweise Einrasten des Zapfens erreicht werden.
- Es ist auch möglich, wenn keine kraftschlüssige Verfüllmasse wie das vorgenannte druckfeste Medium wie Mörtel oder Klebstoff, flüssig eingebrachtes und dann erkaltetes Metall bzw. thermoplastisches Material zur Querkraftübertragung angesetzt wurde, bei Umbaumaßnahmen das System wiederzuverwenden. Optional lassen sich das "Vaterteil" und das "Mutterteil" wieder vollständig von der Kontaktfläche lösen. Daher kann das Steckverbindungssystem aus "Mutterteil" und "Vaterteil" wieder in neue Bauteile eingebaut werden. Es kann zu 100% recycelt werden. Beim Einsatz des Platinen-Greifmechanismus kann aus Kostengründen die Wiederverwendbarkeit des Vaterteils vernachlässigt sein, eine 100% Recycling-Möglichkeit ist jedoch gewährleistet.
- Es ist auch eine Erhöhung des Vorfertigungsgrades möglich. Durch das Stecksystem kann der Vorfertigungsgrad von Fertigbauteilen nämlich bis zu fast 100% gesteigert werden, da die Bauteile auf der Baustelle nur noch durch Zusammenstecken gefügt werden müssen. Dadurch wird bei Fertighäusern eine gerüstlose Montage ermöglicht.

Im Folgenden wird die Erfindung unter Bezugnahme auf die Figuren näher erläutert:

### A. Bezugszeichenliste:

- 1: Erstes Bauteil
- 2: Zweites Bauteil
- 3: Kontaktbereich
- 4: Aufnahmeteil
- 5: Hohlraum
- 6: Behälter des Greifmechanismus innerhalb des Hohlraumes 5
- 7: Greifmechanismus
- 8 a, b: Greifbacken-Reihen
- 9: Zapfen
- 10: Sperrplatte
- 11: Nuten
- 12: Öffnung
- 13 a, b, c: Gleitscheiben
- 14: (Ring)Feder
- 15: Metrisches Gewinde
- 16: Muffe
- 17: Neigung der zahnartigen Elemente
- 18: Zahnprofil
- 19: Einschubrichtung
- 20: laterale Schiebbarkeit
- 21: Platine
- 22: Schlitze
- 23: Druckfestes Medium
- 24: Aussparung in Platine
- 25: Füllmaterial

### B. Figurenübersicht:

**Figur 1****:** Vorrichtung in Ausführungsform mit Greifbacken- Mechanismus
**Figur 2****:** Detailansicht des Greifbereichs des Zapfens und Greifmechanismus aus Fig.1,
**Figur 3a** **bis d:** Greifplatinenmechanismus - Einsteckprinzip
**Figur 4a** **und b:** Greifplatinenmechanismus - Schiebbarkeitsprinzip - eindimensional
**Figur 5a** **und b:** Greifplatinenmechanismus - Schiebbarkeitsprinzip - zweidimensional
**Figur 6****:** Greifplatine - Ausführungsvarianten

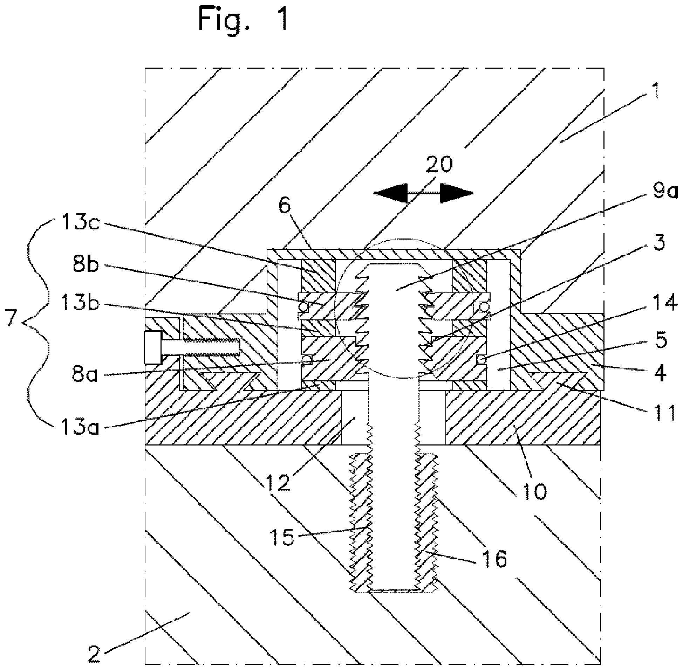

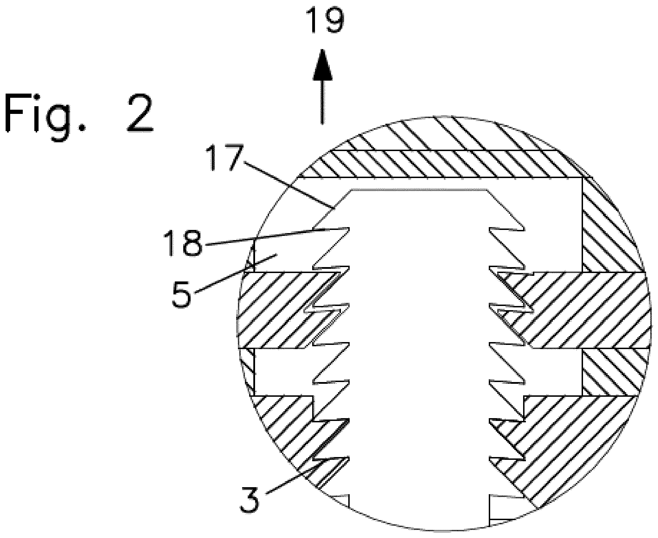

Nur die Ausführungsform in Figuren 1 und 2 zeigt den erfindungsgemäßen Greifbacken-Mechanismus.

### C. Figurenbeschreibung:

**Fig.1** zeigt in einer Schnittansicht das erste und das zweite Bauteil **1** bzw. **2** in einem zusammengefügten Zustand. Der Zapfen **9** des zweiten Bauteils **2** ist in den Greifmechanismus **7** des ersten Bauteils **1** eingeschoben (vgl. **Fig.2**). Die beiden genannten Bauteile sind über den Kontaktbereich **3** formschlüssig miteinander verbunden.

Das Bauteil **1** weist zwecks Bildung einer ersten Verbindungskomponente ein Aufnahmeteil **4** und im Beispiel gemäß **Fig.1** **und** **2** einen Behälter **6** auf, welche einen Hohlraum **5** umgeben, in dem wiederum der Greifmechanismus **7** angeordnet ist. Der Hohlraum **5** wird durch den Aufnahmeteil **4,** die Sperrplatte **10** (optional) und im Beispiel den Behälter **6** (optional) begrenzt. Der zum Bauteil **1** zugeordnete Greifmechanismus **7** weist eine freie laterale Schiebbarkeit (parallel zur Erstreckung der Sperrplatte **10**) innerhalb des Hohlraums **5** auf.

Das zweite Bauteil **2** weist zwecks Bildung einer zweiten Verbindungskomponente den Zapfen **9** mit Muffe **16** und metrischem Gewinde **15** auf. Die Muffe ist fest im zweiten Bauteil eingesetzt und dient als Aufnahmegewinde für den Zapfen. Der zum Bauteil **2** zugeordnete Zapfen **9** kann beispielsweise durch Ein- oder Ausschrauben in seiner Achsrichtung justiert werden. Der greifbare Bereich **9a** des Zapfens **9** ist in Form eines Zahnprofils **17** ausgestaltet. Diese weisen die Neigung **18** auf.

Die Sperrplatte **10** ist unter dem Aufnahmeteil **4** angeordnet und liegt in **Fig.1** direkt plan auf dem zweiten Bauteil **2** auf. Dieser Aufnahmeteil **4** weist im dargestellten Beispiel zumindest zwei Nuten **11** auf, in denen die Sperrplatte **10** in eine Richtung lateral schiebebeweglich geführt ist.

Die Sperrplatte **10** weist die Öffnung **12** zum Hohlraum **5** auf. In dem Hohlraum **5** sind abwechselnd positionierte Greifbacken-Reihen **8a, 8b** als Greifbackenelemente mit den Gleitscheiben **13a, 13b, 13c** positioniert. An den Greifbacken-Reihen **8a, 8b** sind die Federelemente **14,** ausgeführt als Ringfedern angeordnet.

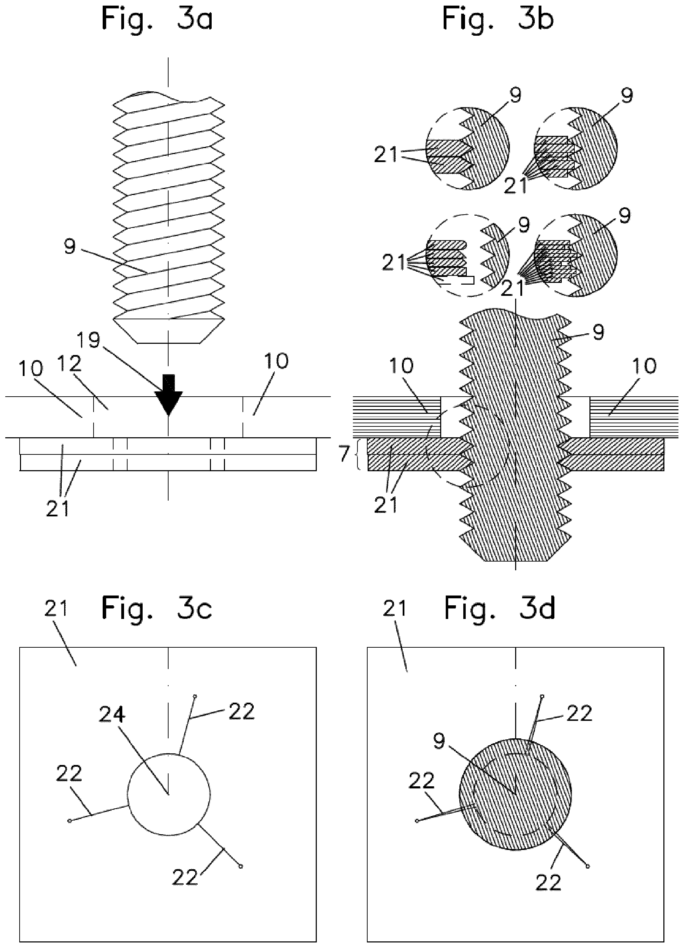

In **Fig.3a** **bis d** ist schematisch eine Ausführungsform eines Greifplatinenmechanismus bevorzugt, aber nicht zwingend mit einem metrischen Gewinde (beispielhaft dargestellt für ein zweigängiges Gewinde) als umlaufendes Zahnprofil und auf diese wirkende Greifleibung als Greifelement dargestellt. **Fig.3a** **und b** zeigen seitliche Schnittansichten der Verbindung, **Fig.3c** **und d** jeweils Draufsichten auf die als Greifelemente **7** dienenden Platinen **21,** wobei **Fig.3a** **und c den** unmontierten Zustand darstellen, während hingegen **Fig.3b** **und d einen** Zustand mit in den Greifplatinenmechanismus, d.h. in die mindestens eine Platine **21** eingeschobenen Zapfen **9** zeigen. Das zweite Bauteil mit dem Zapfen **9** befindet sich in **Fig.3a** **und b** oben, das erste Bauteil mit dem Greifmechanismus **7** unten. Der Zapfen, im Beispiel eine Schraube, wird in der Einschubrichtung **19** in die Öffnung **12** in der Sperrplatte **10** zum Greifmechanismus **7,** umfassend einen Stapel aus einer bis zehn Platinen **21,** vorzugsweise aus einem elastisch verformbaren Metall wie Federstahl hindurchgeschoben und dort fixiert. Bei dem Greifplatinenmechanismus handelt es sich um eine Anordnung von aufeinander gestapelten gleichförmigen Platinen. Jede Platine **21** verfügt über eine Aussparung **24** zur Aufnahme des Zapfens **9** sowie eine Zusammenstellung von radial von dieser ausgehenden Schlitzen **22** (ein bis zwölf Schlitze, vorzugsweise 3, 4, 5 oder 6 Schlitze), die eine elastische Biegung der Platinen **21** lokal um die Aussparung **24** und so eine Aufweitung der Öffnung beim Einschieben des Zapfens und damit wiederum ein Einrasten des Zapfens ermöglichen. Im Bereich der Aussparung ist das Profil der Platineninnenkanten in Anpassung an das Gewinde geformt. Die in **Fig.3a** **bis d** dargestellten Ausführungsbeispiele eignen sich grundsätzlich für alle vorgenannten Zahnprofile und Gewinde, insbesondere für Gewinde mit geradzahligen Gängezahlen.

Die vorgenannte Ausführungsform mit einer oder mehreren Platinen übereinander hat den besonderen Vorteil, dass die einzelnen Platinen in der dargestellten Ausgestaltung geeignet sind, sich an eine vorhandene Gewindesteigung anpassen und in besonders vorteilhafter Weise auch Höhenunterschiede im Eingriffspunkt in der Platine durch eine konstruktiv durch die vorgenannten Schlitze realisierbaren Nachgiebigkeit auszugleichen.

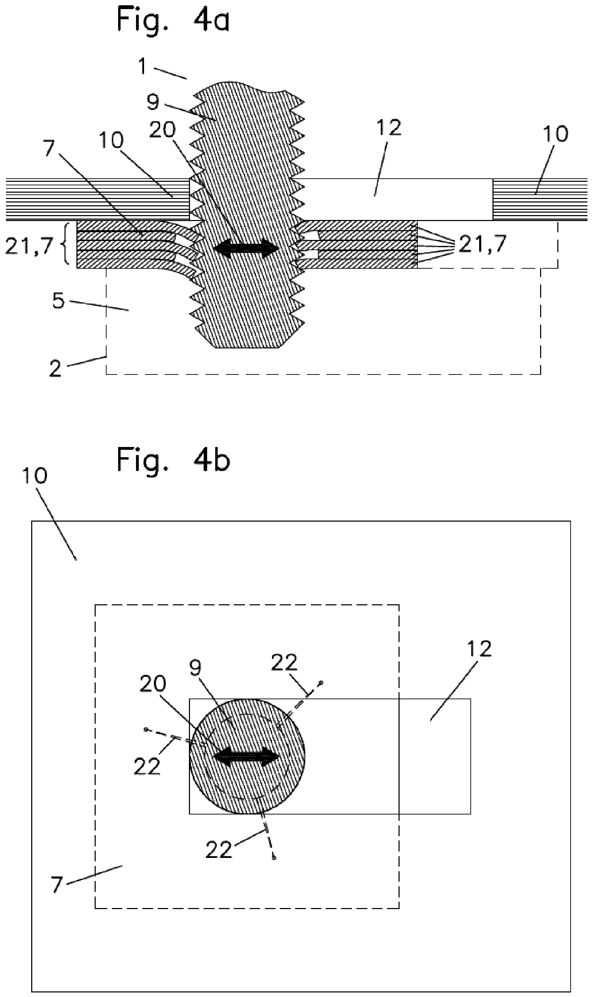

**Fig.4a** **und b** zeigen zudem beispielhaft einen Zapfen mit einem ungeradzahlgängigen Gewinde. Hier stehen sich keine zwei axial auf gleicher Höhe positionierten Gewindeflanken gegenüber, in denen es jeweils zu einem Eingriff einer Platine **21** kommt. Zum Ausgleich dieser in unterschiedlicher Höhe angeordneten Gewindeflanken kommt es zu Verwindungen in diesen Platinen **21** (vgl. **Fig.4a**). Optional wird vorgeschlagen, die aufgrund der vorgenannten Höhenunterschiede auftretenden Verwindungen der Platinen, sofern sie sich auf Bereiche außerhalb der Öffnung in der Sperrplatte erstrecken vorzugsweise durch ein Füllmaterial zu unterfüttern und somit eine flächige Übertragung von Kräften zwischen den Platinen und der Sperrplatte zu realisieren

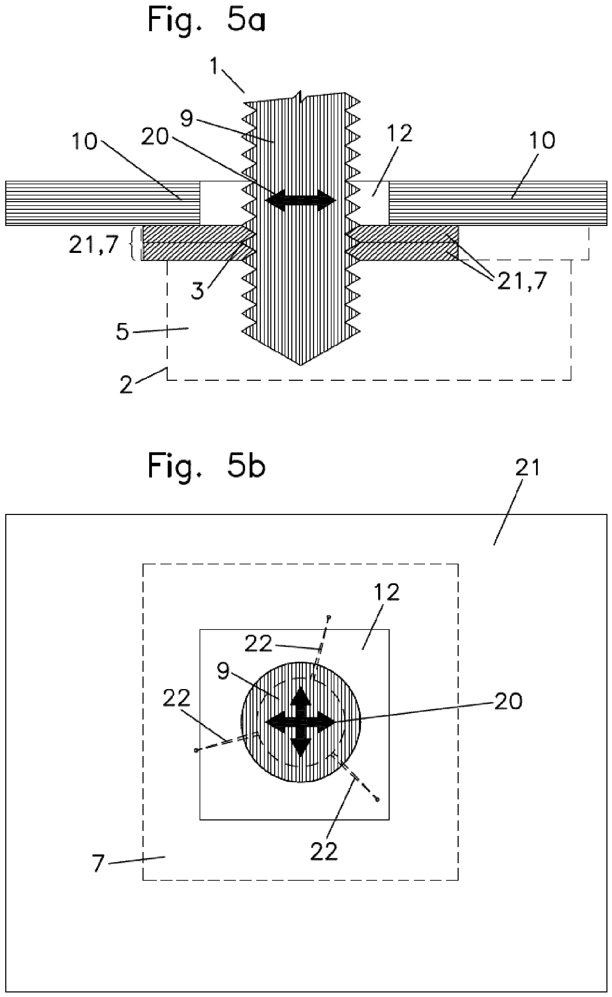

**Fig.4a** **und b** sowie **Fig.5a** **und b** zeigen Ausführungsformen mit Greifplatinenmechanismen, welche nach dem eindimensionalen bzw. zweidimensionalen lateralen Schiebbarkeitsprinzip arbeiten. Das zweite Bauteil mit dem Zapfen **9** befindet sich in **Fig.4a** **und** **5a** oben, das erste Bauteil mit dem Greifmechanismus **7** unten. Der Zapfen **9** ist in **Fig.4a** **und b** in einer als Langloch und in **Fig.5a** **und b** in einer quadratisch gestalteten Öffnung **12** nur in einer Richtung bzw. in zwei Richtungen lateral gemäß Ziffer **20** verschiebbar. Das Gewinde ist hier beispielhaft geradzahlgängig dargestellt, d.h. es stehen sich zwei axial auf gleicher Höhe positionierte Gewindeflanken gegenüber. Ein Ausgleich von Höhenunterschieden der vorgenannten Art ist deswegen hier nicht erforderlich, sondern allenfalls aufgrund der Gewindesteigung hervorgerufenen Verwindung der Platinen im Bereich außerhalb der Erstreckung der Öffnung. Wie in **Fig.4a** **und b** wird auch in **Fig.5a** **und b** der Zapfen **9** in die Öffnung **12** der Sperrplatte **10** eingeführt und in den Greifmechanismus **7** eingeschoben. Darunter befindet sich der Greifmechanismus mit dem Kontaktbereich **3,** welcher in das Gewinde des Zapfens **9** eingreift.

Ein Spiel des Greifplatinenmechanismus im Hohlraum z.B. in **Fig.3a****, b** **und** **4a** vertikal in Zapfenrichtung soll vermieden werden, da ansonsten der Greifplatinenmechanismus beim Einschieben des Zapfens nachgibt und so eine spielfreie Passung zwischen dem ersten und zweiten Bauteil verhindert. Dieses Spiel kann durch Einsetzen eines druckfesten Mediums oder von Zwischenkomponenten wie z.B. Gleitelementen oder Distanzstücken unterhalb des Greifmechanismus in den Hohlraum vermieden werden.

Weiterhin ist es möglich, die Öffnung und/oder den Hohlraum nach dem Toleranzausgleich zur Aufhebung der Schiebbarkeit mit einem druckfesten Medium ebenfalls aufzufüllen, vorzugsweise mit einer aushärtbaren Vergussmasse auszugießen. Hierzu kann der Hohlraum nach unten hin verschlossen sein, d.h. ein Einführen des Zapfens erfolgt dabei von oben, wie beispielsweise in **Fig.3a** **und b** dargestellt.

Weiterhin ist das Verfüllen auch möglich, wenn der Zapfen nach oben weist. Die Verfüllung kann insbesondere durch einen Kanal/eine Bohrung durch den/die die zunächst Verfüllmasse, die später erhärtet, eingebracht werden kann, erfolgen (Bei der Herstellung können für diesen Zweck Kanäle zwischen dem den Greifmechanismus wirtenden Hohlraum und der (Innen-)Seite der Wand vorgesehen sein.

Eine weitere Möglichkeit besteht darin, dass ein thermoaktivierbares Material (z, B. Zinnlegierung), das sich unter Energiezufuhr verflüssigt, bereits im Hohlraum vorhanden ist und dann an vorgesehene Positionen fließt, um dann nach dem Erhärten die Verschiebbarkeit zu verhindern, bzw. die feste Verbindung herzustellen. Das Lösen kann dann zum Beispiel wieder durch Energiezufuhr und die hierdurch bedingte Verflüssigung der Verfüllmasse ermöglicht werden.

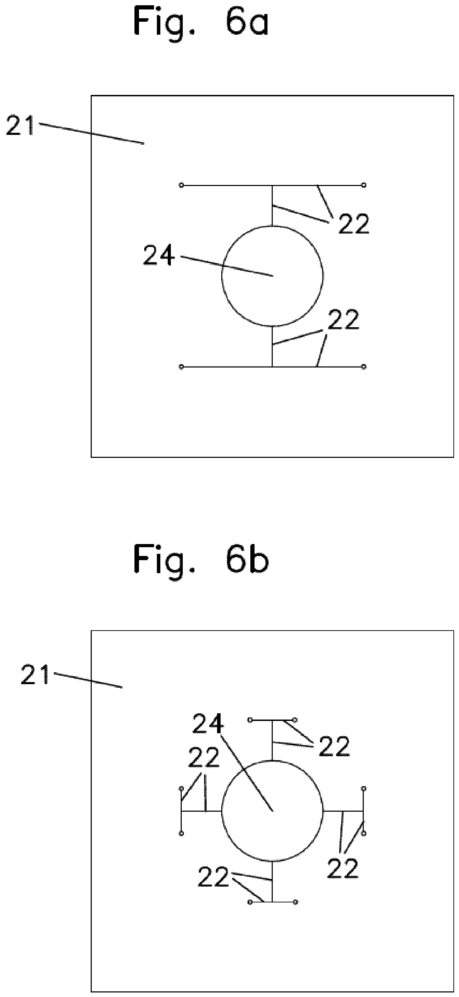

Ferner zeigen **Fig.6a** **und b** beispielhaft Platinen **21** mit je einer Aussparung **24** für die Aufnahme eines Zapfens sowie von der Aussparung ausgehenden Schlitze **22,** die sich verzweigen und so die die Patine ertüchtigen, von der Gewindesteigung hervorgerufene Höhenunterschiede in der Platine spannungsärmer aufzunehmen. Zur Vermeidung von Spannungsspitzen an den besonders hoch belasteten Schlitzenden **26** sind diese mit Entlastungsbohrungen versehen.

## Patentansprüche

1. Vorrichtung mit Steckverbindungen zwischen mindestens zwei Bauteilen **(1,2),** die über ihre Kontaktflächen formschlüssig miteinander verbindbar sind, wobei
- das erste Bauteil **(1)** zwecks Bildung einer ersten Verbindungskomponente wenigstens einen Aufnahmeteil **(4)** aufweist, welche einen Hohlraum **(5)** umgibt, in dem wenigstens ein Greifmechanismus **(7)** angeordnet ist und
- das zweite Bauteil **(2)** zwecks Bildung einer Verbindungskomponente wenigstens einen Zapfen **(9)** zur Einbringung in den Greifmechanismus aufweist
- der zur Verbindungskomponente des ersten Bauteils **(1)** zugeordneten Greifmechanismus **(7)** eine freie laterale Schiebbarkeit innerhalb des Hohlraums aufweist
- der zur Verbindungskomponente des zweiten Bauteils **(2)** zugeordnete Zapfen **(9)** in Richtung seiner Längsachse optional justiert werden kann,
**dadurch gekennzeichnet, dass** in dem Hohlraum **(5)** ein aus abwechselnd positionierten Greifbacken-Reihen **(8)** und Gleitscheiben **(13)** zusammengestellter Greifmechanismus **(7)** angeordnet ist.

2. Vorrichtung nach Anspruch 1 **dadurch gekennzeichnet, dass** das erste Bauteil über dem zweiten Bauteil sowie eine Sperrplatte **(10)** unter dem Aufnahmeteil **(4)** angeordnet ist.

3. Vorrichtung nach Anspruch 1 **dadurch gekennzeichnet, dass** das erste Bauteil unter dem zweiten Bauteil sowie eine Sperrplatte **(10)** über dem Aufnahmeteil **(4)** angeordnet ist.

4. Vorrichtung nach einem der Ansprüche 2 oder 3, **dadurch gekennzeichnet, dass** der Aufnahmeteil **(4)** zwei Nuten **(11)** aufweist, in denen die Sperrplatte **(10)** schiebebeweglich angeordnet ist.

5. Vorrichtung nach einem der Ansprüche 2 bis 4 **dadurch gekennzeichnet, dass** die Sperrplatte **(10)** eine Öffnung **(12)** aufweist.

6. Vorrichtung nach einem der Ansprüche 1 bis 5 **dadurch gekennzeichnet, dass** am äußeren Umfang der Greifbacken-Reihen **(8a, 8b)** Federelemente **(14)** angeordnet sind.

7. Vorrichtung nach einem der vorhergehenden Ansprüche **dadurch gekennzeichnet, dass** im zweiten Bauteil **(2)** der Zapfen **(9)** über ein metrisches Gewinde **(15)** befestigt ist.

8. Vorrichtung nach Anspruch 7 **dadurch gekennzeichnet, dass** in dem zweiten Bauteil **(2)** eine Muffe **(16)** zur Befestigung des Zapfens **(9)** angeordnet ist.

9. Vorrichtung nach einem der vorhergehenden Ansprüche **dadurch gekennzeichnet, dass** der greifbare Bereich des Zapfens **(9a)** derart ausgestaltet wird, dass er, gegen Zugbeanspruchung gesichert, einrastbar ist.

10. Vorrichtung nach Anspruch 9 **dadurch gekennzeichnet, dass** der greifbare Bereich des Zapfens **(9a)** in Form von zahnartigen Elementen **(17)** ausgestaltet ist.

11. Vorrichtung nach Anspruch 10 **dadurch gekennzeichnet, dass** die Neigung **(18)** der zahnartigen Elemente **(17)** in Einschubrichtung **(19)** ausgestaltet ist.

12. Verfahren zur Herstellung von Steckverbindungen von mindestens zwei Bauteilen **(1,2)** mittels einer Vorrichtung nach einem der Ansprüche 1 bis 10 **dadurch gekennzeichnet, dass** der Zapfen **(9)** zwischen den Greifbackenelementen **(8)** eingeschoben wird.

13. Verwendung der Vorrichtung nach einem der Ansprüche 1 bis 11 zur Herstellung von Steckverbindungen von mindestens zwei Bauteilen **(1,2).**

## Claims

1. Device with plug connections between at least two components **(1, 2)** that can be connected to each other in a form-fitting manner via their contact surfaces, wherein
- the first component **(1)** has, for the purpose of forming a first connection component, at least one receiving part **(4)** which surrounds a cavity **(5)** in which at least one gripping mechanism **(7)** is arranged, and
- the second component **(2)** has, for the purpose of forming a connection component, at least one pin **(9)** for insertion into the gripping mechanism,
- the gripping mechanism **(7)** associated with the connection component of the first component **(1)** has a free lateral displaceability within the cavity
- the pin **(9)** associated with the connection component of the second component **(2)** can optionally be adjusted in the direction of its longitudinal axis,
**characterised in that** a gripping mechanism **(7)** composed of alternately positioned gripping jaw rows **(8)** and sliding discs **(13)** is arranged in the cavity **(5).**

2. Device according to claim 1, **characterised in that** the first component is arranged above the second component, as well as a blocking plate **(10)** under the receiving part **(4).**

3. Device according to claim 1, **characterised in that** the first component is arranged under the second component, as well as a blocking plate **(10)** above the receiving part **(4).**

4. Device according to one of claims 2 or 3, **characterised in that** the receiving part **(4)** has two grooves **(11)** in which the blocking plate **(10)** is displaceably arranged.

5. Device according to one of claims 2 to 4, **characterised in that** the blocking plate **(10)** has an opening **(12).**

6. Device according to one of the claims 1 to 5, **characterised in that** spring elements **(14)** are arranged on the outer circumference of the gripping jaw rows **(8a, 8b).**

7. Device according to one of the preceding claims, **characterised in that** the pin **(9)** is attached in the second component **(2)** by means of a metric thread **(15).**

8. Device according to claim 7, **characterised in that** a sleeve **(16)** for fastening the pin **(9)** is arranged in the second component **(2).**

9. Device according to one of the preceding claims, **characterised in that** the grippable region of the pin **(9a)** is designed such that it is latcheable while being secured against tensile loading.

10. Device according to claim 9, **characterised in that** the grippable region of the pin **(9a)** is configured in the form of tooth-like elements **(17).**

11. Device according to claim 10, **characterised in that** the inclination **(18)** of the tooth-like elements **(17)** is configured in the insertion direction **(19).**

12. Method for producing plug connections of at least two components **(1, 2)** by means of a device according to one of the claims 1 to 10, **characterised in that** the pin **(9)** is inserted between the gripping jaw elements **(8).**

13. Use of the device according to one of the claims 1 to 11 for producing plug connections of at least two components **(1, 2).**

## Revendications

1. Dispositif muni de liaisons par enfichage entre au moins deux éléments de construction (1, 2) qui peuvent être reliés entre eux par complémentarité de forme par leurs surfaces de contact, dans lequel
- le premier élément de construction (1) présente, en vue de former un premier composant de liaison, au moins une partie de réception (4) qui entoure un espace creux (5) dans lequel est disposé au moins un mécanisme de préhension (7), et
- le deuxième élément de construction (2) présente, en vue de former un composant de liaison, au moins un tourillon (9) à insérer dans le mécanisme de préhension,
- le mécanisme de préhension (7) associé au composant de liaison du premier élément de construction (1) présente une possibilité de coulissement latéral libre à l'intérieur de l'espace creux,
- le tourillon (9) associé au composant de liaison du deuxième élément de construction (2) peut être ajusté optionnellement dans la direction de son axe longitudinal,
**caractérisé en ce qu'**un mécanisme de préhension (7) composé de rangées de mâchoires de préhension (8) et de disques de glissement (13) positionnés en alternance est disposé dans l'espace creux (5).

2. Dispositif selon la revendication 1, **caractérisé en ce que** le premier élément de construction est disposé au-dessus du deuxième élément de construction, et une plaque de blocage (10) est disposée sous la partie de réception (4).

3. Dispositif selon la revendication 1, **caractérisé en ce que** le premier élément de construction est disposé sous le deuxième élément de construction, et une plaque de blocage (10) est disposée au-dessus de la partie de réception (4).

4. Dispositif selon l'une des revendications 2 ou 3, **caractérisé en ce que** la partie de réception (4) présente deux rainures (11) dans lesquelles la plaque de blocage (10) est disposée de manière à pouvoir coulisser.

5. Dispositif selon l'une des revendications 2 à 4, **caractérisé en ce que** la plaque de blocage (10) présente une ouverture (12).

6. Dispositif selon l'une des revendications 1 à 5, **caractérisé en ce que** des éléments élastiques (14) sont disposés sur le pourtour extérieur des rangées de mâchoires de préhension (8a, 8b).

7. Dispositif selon l'une des revendications précédentes, **caractérisé en ce que** le tourillon (9) est fixé par un filetage métrique (15) dans le deuxième élément de construction (2).

8. Dispositif selon la revendication 7, **caractérisé en ce qu'**un manchon (16) destiné à fixer le tourillon (9) est disposé dans le deuxième élément de construction (2).

9. Dispositif selon l'une des revendications précédentes, **caractérisé en ce que** la zone préhensible du tourillon (9a) est conçue de manière à pouvoir être encliquetée en étant bloquée à l'encontre des contraintes de traction.

10. Dispositif selon la revendication 9, **caractérisé en ce que** la zone préhensible du tourillon (9a) est conçue sous la forme d'éléments en forme de dents (17).

11. Dispositif selon la revendication 10, **caractérisé en ce que** l'inclinaison (18) des éléments en forme de dents (17) est réalisée dans la direction d'insertion (19).

12. Procédé de réalisation de liaisons par enfichage d'au moins deux éléments de construction (1, 2) au moyen d'un dispositif selon l'une des revendications 1 à 10, **caractérisé en ce que** le tourillon (9) est inséré entre les éléments de mâchoire de préhension (8).

13. Utilisation du dispositif selon l'une des revendications 1 à 11 pour la réalisation de liaisons par enfichage d'au moins deux éléments de construction (1, 2).
